# EUROPEAN PATENT SPECIFICATION

(11) **EP 2 426 956 B1**
(45) Date of publication and mention of the grant of the patent: **03.06.2020**
(21) Application number: 10769292.3
(22) Date of filing: 26.04.2010
(51) Int. Cl.: H04W 4/00

(54) **DATA TRANSFERRING METHOD, SYSTEM AND RELATED NETWORK DEVICE BASED ON PROXY MOBILE (PM) IPV6**
DATENÜBERTRAGUNGSVERFAHREN, SYSTEM UND ENTSPRECHENDES NETZWERK AUF PM-IPV6-BASIS
PROCÉDÉ DE TRANSFERT DE DONNÉES, SYSTÈME ET DISPOSITIF DE RÉSEAU CORRESPONDANT SELON UN MANDATAIRE MOBILE (PM) IPV6

(30) Priority: 27.04.2009 CN 200910082982
(43) Date of publication of application: 07.03.2012
(73) Proprietor: China Mobile Communications Corporation, Beijing 100032 (CN)
(72) Inventor: HUI, Min, Beijing 100032 (CN); DENG, Hui, Beijing 100032 (CN)
(74) Representative: Rupp, Christian
(86) International application number: PCT/CN2010/072187
(87) International publication number: WO 2010/124603

(56) References cited:
- WO-A1-2008/112744
- CN-A- 1 463 130
- CN-A- 101 047 614
- MUHANNA M KHALIL NORTEL S GUNDAVELLI K LEUNG CISCO SYSTEMS A: "GRE Key Option for Proxy Mobile IPv6; draft-ietf-netlmm-grekey-option-07.txt", GRE KEY OPTION FOR PROXY MOBILE IPV6; DRAFT-IETF-NETLMM-GREKEY-OPTION-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. netlmm, no. 7, 26 April 2009 (2009-04-26), XP015062212, [retrieved on 2009-04-27]

## Description

### Field of the Invention

The present invention relates to the field of mobile communications and particularly to a PMIPv6 (Proxy Mobile Internet Protocol) based data transmission technology.

### Background of the Invention

Along with evolvement of a network from the IPv4 (Internet Protocol version 4) to the IPv6, the Internet Engineering Task Force (IETF) has established the Mobile Internet Protocol (MIP) in order to support a mobility IPv6 access of a terminal. The MIPv6 relates to three entities, i.e., a Mobile Node (MN), a Home Agent (HA) and a Correspondent Node (CN). When the MN is located in the home network, the MN communicates with the CN by using a Home of Address (HoA). When the MN moves to a foreign network, the MN has the HoA in the home network unchanged and is also provided with a temporary IP address allocated in the foreign network, i.e., a Care of Address (CoA). The MN registers with the HA in a Binding Update (BU) process and notifies the HA of a mapping relationship between the HoA and the CoA, and the HA maintains a binding list between the HoA and the CoA. After the HA accepts registration of the MN, data packet transmitted from the CN to the MN is encapsulated by the HA without changing an inner-layer address of an encapsulated data packet, that is, the inner-layer source address is the address of the CN and the inner-layer destination address is the HoA, and the outer-layer source address is the address of the HA and the outer-layer destination address is the CoA, and the HA forwards the encapsulated data packet to the MN through a tunnel; and the MN transmits a data packet to the CN with the outer-layer source address being the CoA and the outer-layer destination address being the address of the HA, and the inner-layer source address being the HoA and the inner-layer destination address being the address of the CN, and the HA de-encapsulates the data packet upon reception of the data packet transmitted through a reverse tunnel from the MN and forwards the de-encapsulated data packet to the CN. The HA forwards the data packet of the MN in a communication mode referred to as a bidirectional tunnel model.

The Proxy Mobile IPv6 (PMIPv6) refers to an extension to the MIPv6 and differs from the MIPv6 in that a Mobile Access Gateway (MAG) emulates the home network by notifying the hosted MN of the prefix of the home network so that the MN believes that it is located in the home network all the time; and the MAG registers with a Local Mobility Anchor (LMA) capable of functioning as the home agent, on behalf of the MN in a Proxy Binding Update (PBU) process, and finally a bidirectional tunnel between the MAG and the LMA is established for transmitting a data packet of the MN with the interface address of the MAG being the CoA.

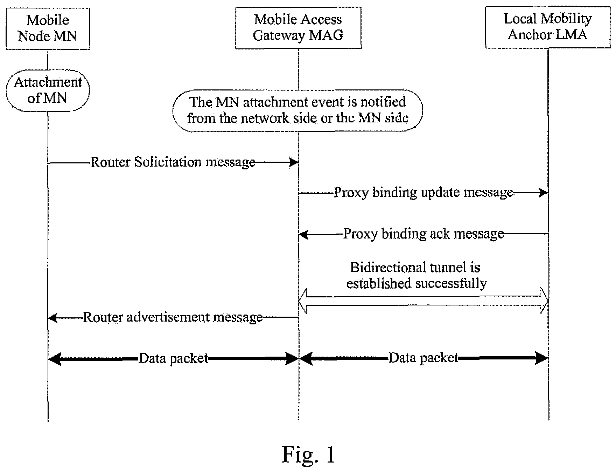

In an existing PMIPv6-based data transmission flow as illustrated in Fig. 1, the MN transmits a Router Solicitation message to the hosting MAG after accessing the PMIPv6 domain in an attachment process; the MAG registers with the LMA on behalf of the MN by transmitting a Proxy Binding Update (PBU) message to the LMA and notifies the LMA of a mapping relationship between the interface address of the MAG and address information of the MN; the LMA accepts registration of the MAG on behalf of the MN, stores in a Binding Cache Entry (BCE) the mapping relationship between the address information of the MN and the interface address of the MAG and returns a Proxy Binding Ack (PBA) message to the MAG; the MAG returns a Router Advertisement message to the MN upon reception of the PBA message, which indicates successful establishment of a bidirectional tunnel between the MAG and the LMA; and subsequently a data packet of the MN is transmitted over the bidirectional tunnel established between the MAG and the LMA.

The inventors have identified that in the existing 3GPP Long-Term Evolvement (LTE) system, a separate GTP-U tunnel may be created for each PDP Context/EPS Bearer of the terminal and a Service Data Flow (SDF) may be bound to the GTP-U tunnel corresponding to the PDP Context/EPS Bearer to thereby enable distinguishing and charging control based upon the service data flow. In a MIPv6-based multi-connection (Monami) scenario, the HoA of the MN is allowed to be bound with a plurality of CoAs, and then one or more flows are bounded onto one of the CoAs to thereby forward the different flows onto different network interfaces. However, data packets of the MN cannot be distinguished and controlled based on the service flow in the existing PMIPv6-based data transmission solution.
WO 2008/112744 A1 discloses the following: In a network that supports mobility of a mobile node, a tunnel between a first mobility node and a second mobility node is established in the network. The established tunnel is according to a tunneling protocol (e.g., Generic Routing Encapsulation tunneling protocol) that uses at least one key (208) for encapsulating data communicated through the tunnel. The symmetric or asymmetric key may be used for identifying a particular traffic flow in either the forward or the reverse direction between mobility nodes, e.g., when supporting mobility nodes that are using overlapping private IPv4 addressing. Signaling is communicated to provide mobility support of the mobile node according to a mobility protocol, where the mobility protocol is selected from among a Proxy Mobile Internet Protocol and Mobile IP version 6.
MUHANNA M KHALIL NORTEL S GUNDAVELLI K LEUNG CISCO SYSTEMS A discloses the following: This specification defines a new Mobility Option for allowing the Mobile Access Gateway and the Local Mobility Anchor to negotiate GRE (Generic Routing Encapsulation) encapsulation mode and exchange the downlink and uplink GRE keys which is used for marking the downlink and uplink traffic that belong to a specific mobility session. In addition, the same mobility Option ran be used to negotiate the GRE encapsulation mode without exchanging the GRE keys.

### Summary of the Invention

The invention is defined by the amended claims. Embodiments of the invention provide a PMIPv6-based data transmission method and system to address the problem that data packets of an MN cannot be distinguished and controlled based on a service flow in the existing PMIPv6-based data transmission solution.

Accordingly the embodiments of the invention provide a Mobile Access Gateway, MAG, and a Local Mobility Anchor, LMA.

A PMIPv6-based data transmission method according to an embodiment of the invention includes:
establishing, by a Mobile Access Gateway, MAG, and a Local Mobility Anchor, LMA, a bidirectional tunnel based upon binding of a service flow through interaction of messages after a Mobile Node, MN, initiates the service flow, wherein a downlink Generic Routing Encapsulation, GRE, key and an uplink GRE key are allocated to the service flow and the LMA adds a binding relationship between a service flow identifier (ID) of the service flow and address information of the MN during establishment of the bidirectional tunnel; and
transmitting, by the MAG and the LMA, a data packet of the service flow initiated by the MN over the bidirectional tunnel according to the service flow identifier, the binding relationship, and the uplink and downlink GRE keys;
wherein, when the MN initiates two or more service flows, each of the service flows has a service flow identifier, and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask.

A PMIPv6-based data transmission system according to an embodiment of the invention includes a Mobile Access Gateway, MAG, and a Local Mobility Anchor, LMA, wherein:
the MAG and the LMA are configured to establish a bidirectional tunnel based upon binding of a service flow through interaction of messages after a Mobile Node, MN, initiates the service flow, wherein a downlink Generic Routing Encapsulation, GRE, key and an uplink GRE key are allocated to the service flow and the LMA is further configured to add a binding relationship between a service flow identifier of the service flow and address information of the MN during establishment of the bidirectional tunnel; and
the MAG and the LMA are further configured to transmit a data packet of the service flow initiated by the MN over the bidirectional tunnel according to the service flow identifier, the binding relationship and the uplink and downlink GRE keys.

A Mobile Access Gateway, MAG, according to an embodiment of the invention includes:
a sending unit configured to transmit to a Local Mobility Anchor, LMA, a first proxy binding update message instructing to add binding of a service flow upon reception of a first data packet of the service flow initiated by a Mobile Node, MN, wherein the first proxy binding update message includes a service flow identifier generated for the service flow and a downlink Generic Routing Encapsulation, GRE, key allocated to the service flow; and wherein, when a MN initiates two or more service flows, each of the service flows has a service flow identifier; and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask;
a reception unit configured to receive a first proxy binding ack message returned from the LMA in response to the first proxy binding update message, wherein the first proxy binding ack message includes the service flow identifier and an uplink GRE key allocated to the service flow; and
a transmission unit configured to transmit a data packet of the service flow over a bidirectional tunnel established, based upon binding of the service flow, with the LMA, according to the service flow identifier and the uplink and downlink GRE keys.

A Local Mobility Anchor, LMA, according to an embodiment of the invention includes:
a reception unit configured to receive a first proxy binding update message transmitted from a Mobile Access Gateway, MAG, to instruct to add binding of a service flow, wherein the first proxy binding update message includes a service flow identifier generated for the service flow and a downlink Generic Routing Encapsulation, GRE, key allocated to the service flow; and wherein, when a MN initiates two or more service flows, each of the service flows has a service flow identifier; and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask;
a binding processing unit configured to add a binding relationship between the service flow identifier and address information of an MN according to the received first proxy binding update message and return to the MAG a first proxy binding ack message including the service flow identifier and an uplink GRE key allocated to the service flow; and
a transmission unit configured to transmit a data packet of the service flow over a bidirectional tunnel established, based upon binding of the service flow, with the MAG, according to the service flow identifier, the binding relationship, and the uplink and downlink GRE keys.

In the PMIPv6-based data transmission method, system and related network devices according to the embodiments of the invention, the MAG and the LMA establish a bidirectional tunnel based upon binding of a service flow through interaction of messages after an MN initiates the service flow, where a downlink GRE key and an uplink GRE key are allocated to the service flow and the LMA adds a binding relationship between a service flow identifier of the service flow and address information of the MN during establishment of the bidirectional tunnel, and then the bidirectional tunnel has been established successfully between the MAG and the LMA, and the service flow is bound with the address information of the MN through an operation of adding binding of the service flow; and the MAG and the LMA transmit a data packet of the service flow initiated by the MN over the bidirectional tunnel between the MAG and the LMA according to the service flow identifier, the binding relationship, and the uplink and downlink GRE keys to thereby distinguish and control data packets based on a service flow.

### Brief Description of the Drawings

Fig. 1 is a flow chart of PMIPv6-based data transmission in the prior art;
Fig. 2 is a schematic diagram of a format of a PBU message in the prior art;
Fig. 3 is a schematic diagram of a format of a service flow identification option according to an embodiment of the invention;
Fig. 4 is a schematic diagram of a format of a transport level description according to an embodiment of the invention;
Fig. 5 is a flow chart of a PMIPv6-based data transmission method according to an embodiment of the invention;
Fig. 6 is a block diagram of a PMIPv6-based data transmission system according to an embodiment of the invention;
Fig. 7 is a block diagram of a possible structure of an MAG according to an embodiment of the invention; and
Fig. 8 is a block diagram of a possible structure of an LMA according to an embodiment of the invention.

### Detailed Description of the Embodiments

In view of the problem that data packets of an MN cannot be distinguished and controlled based on a service flow in the existing PMIPv6-based data transmission solution, an improved PMIPv6-based data transmission flow is adapted in embodiments of the invention by defining a new service flow identification option and adding the new service flow identification option into a PBU message and a PBA message to distinguish and control data packets of an MN based on a service flow.

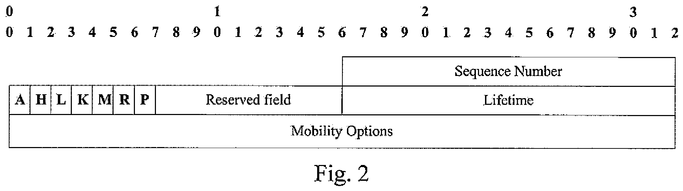

Referring to Fig. 2, a format of an existing PBU message includes fields (domains) of Sequence#, Lifetime, and Mobility Options, where the name, length and means of each of the fields (domains) included in the PBU message are as illustrated in Table. 1. A PBA message also includes the field of Mobility Options, and a specific format of the message is not repeated here.

**Table 1**

| **Field (domain)** | **Length (bit)** | **Meaning** |
|---|---|---|
| Sequence # | 16 | Sequence number with a logically monotonously incremented value |
| A | 1 | It is set as 1 to indicate that returning a PBA message is required |
| H | 1 | Require a receiving node to function as a home agent of the mobile node |
| L | 1 | Compatibility of a local address of a link |
| K | 1 | Key management mobility |
| M | 1 | It is set as 1 to indicate that the binding update relates to MAP registration |
| R | 1 | It is set as 1 to indicate that the binding update originates from a mobile router |
| P | 1 | It is set as 1 to indicate that the binding update relates to proxy registration |
| Lifetime | 16 | Lifetime |
| Mobility Options | Variable length | Include zero or several mobility options in the TLV format |

A new service flow identification option is added into the PBU message and the PBA message as one of the options included in the Mobility Options. The service flow identification option defines a Service Flow ID of an MN and also may define either or both of a transport level description and an application level description of the service flow so that a message receiver can know the ID of the service flow and further know related attributes of the service flow.

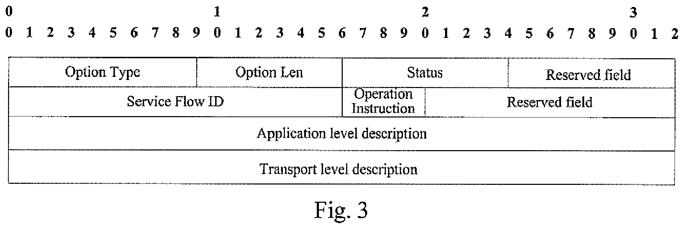

Referring to Fig. 3, a format of the service flow identification option includes fields (domains) of Service Flow ID, Status, Operation Instruction (PRO), Option Type, Option Length (Option Len), and Reserved.

The field of Service Flow ID represents a unique identifier of the service flow.

The field of Status is enabled in the PBA message to represent a successful or failing operation of binding the service flow.

The field of Operation Instruction (PRO) represents various operations to be performed on binding of the service flow, e.g., an operation of adding binding of a service flow, an operation of deleting binding of a service flow, or an operation of modifying binding of a service flow.

Optionally, the service flow identification option may further include an application level description option for describing application level attributes of the service flow, e.g., a service ID, and an application level protocol in use.

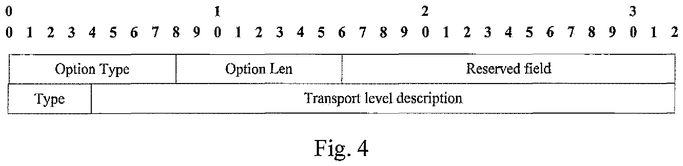

Optionally, the service flow identification option may further include a transport level description option for describing a packet filter attribute of the service flow, and referring to Fig. 4, a format of the transport level description option includes the fields (domains) of Option Type, Option Length (Option Len), Reserved, Type, and Transport Level Description. Different values of the field of Type may represent different combinations of the packet filter attributes. By way of an example, three valid combinations of the packet filter attributes, each of which corresponds to a value of the field of Type, are presented in Table 2. In a specific implementation, a combination of the packet filter attributes may include one or any combination of the attributes of Destination IP Address, Port Range, Flow Label, IPSec Security Parameter Index, Protocol ID of the protocol above IP, and Type of Service/Traffic class and Mask.

Both the transport level description option and the application level description option are variable in length.

**Table 2**

| **The field of Type** | **The field of Transport level description** |
|---|---|
| 0 | Destination IP Address; Source Port Range; Destination Port Range; Protocol ID of the protocol above IP; Type of Service (TOS) (IPv4)/Traffic class (IPv6) and Mask |
| 1 | Destination IP Address; Protocol ID of the protocol above IP; Type of Service (TOS) (IPv4)/Traffic class (IPv6) and Mask; IPSec Security Parameter Index (SPI) |
| 2 | Destination IP Address; Type of Service (TOS) (IPv4)/Traffic class (IPv6) and Mask; Flow Label (IPv6) |

Based upon the new service flow identification option, an embodiment of the invention provides a PMIPv6-based data transmission method including: an MAG and an LMA establish a bidirectional tunnel based upon binding of a service flow through interaction of messages after an MN initiates the service flow, where a downlink GRE Key and an uplink GRE Key are allocated to the service flow and the LMA adds a binding relationship between a service flow ID of the service flow and address information of the MN during establishment of the bidirectional tunnel; and the MAG and the LMA transmit a data packet of the service flow initiated by the MN over the established bidirectional tunnel according to the service flow ID, the binding relationship, and the uplink and downlink GRE Keys.

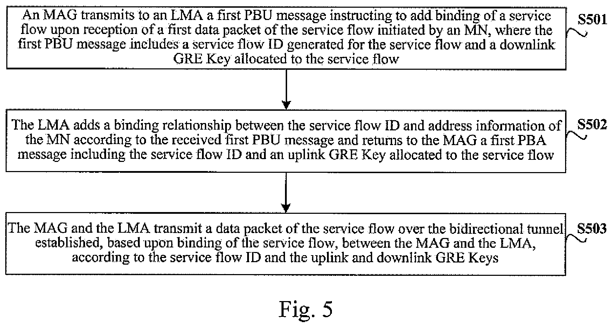

The foregoing method may be particularly illustrated in Fig. 5 and include the following steps.

S501. An MAG transmits to an LMA a PBU message instructing to add binding of a service flow (referred to as a first PBU message for the sake of distinguishing) upon reception of a first data packet of the service flow initiated by an MN, where the first PBU message includes a service flow ID generated for the service flow and a downlink Generic Routing Encapsulation (GRE) Key allocated to the service flow.

In a specific implementation, the service flow identification option included in the first PBU message includes: Service Flow ID and PRO field, where the Service Flow ID represents the sequence number of the service flow and is logically monotonously incremented for each service flow initiated by the MN, and the Service Flow ID takes the value of 0 for a first service flow initiated by the MN, 1 for a second service flow initiated by the MN, and so on, and the PRO field may take the value of 0 to represent addition of binding of a service flow. The first PBU message may further include either or both a transport level description option and an application level description option to describe related attributes of the service flow.

S502: The LMA adds a binding relationship between the service flow ID and address information of the MN according to the received first PBU message and returns to the MAG a PBA message (referred to as a first PBA message for the sake of distinguishing), which includes the service flow ID and an uplink GRE Key allocated to the service flow.

Like the prior art, the MAG registers with the LMA on behalf of the MN by transmitting the PBU message to the LMA and notifies the LMA of a mapping relationship between the interface address of the MAG and the address information of the MN. Since the PBU message is extended and the service flow identification option is added, the LMA adds corresponding binding information of the service flow, i.e., the binding relationship between the service flow ID and the address information of the MN, according to the first PBU message, and the binding relationship between the service flow ID and the address information of the MN may be buffered in a local binding cache entry, where the address information of the MN may be an IP address or prefix of the MN. Like the PBU message, the PBA message may also include either or both of a transport level description option and an application level description option to describe related attributes of the service flow. The Generic Routing Encapsulation (GRE) refers to tunneling adopted for the mobility IP to allow a data packet in one protocol to be encapsulated in a payload of a data packet in another protocol.

Then a bidirectional tunnel has been established successfully between the MAG and the LMA, and the service flow has been bound to the address information of the MN through an operation of adding binding of the service flow to thereby facilitate distinguishing and control of data packets based on a service flow.

S503. The MAG and the LMA transmit a data packet of the service flow over the bidirectional tunnel established, based upon binding of the service flow, between the MAG and the LMA, according to the service flow ID and the uplink and downlink GRE Keys.

In a specific implementation, assumed that communication is conducted between the MN and the CN, the process may include the following steps:
the MAG encapsulates an uplink data packet of the service flow (i.e., a data packet transmitted from the MN to the CN) according to the service flow ID and the uplink GRE Key and forwards the encapsulated uplink data packet to the LMA over the bidirectional tunnel, and the LMA de-encapsulates the encapsulated uplink data packet forwarded from the MAG according to the service flow ID and the uplink GRE Key and forwards the de-encapsulated uplink data packet to the CN; and
the LMA encapsulates a downlink data packet of the service flow (i.e., a data packet transmitted from the CN to the MN) according to the service flow ID and the downlink GRE Key and forwards the encapsulated downlink data packet to the MAG over the bidirectional tunnel, and the MAG de-encapsulates the encapsulated downlink data packet forwarded from the LMA according to the service flow ID and the downlink GRE Key and forwards the de-encapsulated downlink data packet to the MN.

Subsequently the following steps may further be included if the MN terminates the service flow.

In the step A, the MAG transmits to the LMA a PBU message instructing to delete binding of the service flow (referred to as a second PBU message for the sake of distinguishing) upon determining that the MN terminates the service flow, where the second PBU message includes the service flow ID.

Correspondingly, the service flow identification option included in the second PBU message includes Service Flow ID (the value of which is the same as that in the first PBU message, the Service Flow ID takes the value of 0 for a first service flow initiated by the MN) and PRO field which may take the value of 1 to represent deletion of binding of the service flow.

In the step B, the LMA deletes the locally buffered binding relationship between the service flow ID and the address information of the MN according to the received second PBU message and returns to the MAG a PBA message (referred to as a second PBA message for the sake of distinguishing) including the service flow ID.

In the second PBU message and the second PBA message, related attributes of the service flow may also be described in either or both of a transport level description option and an application level description option.

Then the bidirectional tunnel between the MAG and the LMA has been removed, and binding between the service flow and the address information of the MN has been canceled through an operation of deleting binding of the service flow.

The PMIPv6-based data transmission method according to the embodiment of the invention can address effectively the problem that data packets of the MN cannot be distinguished and controlled based on a service flow, and distinguish and further correspondingly control data packets of a service flow or a type of service flows of the MN; and also the related attributes of the service flow can be described formally in the embodiment of the invention.

The PMIPv6-based data transmission method according to the embodiment of the invention is applicable to a scenario where the MN is a terminal with a single interface and a scenario where the MN is a terminal with a plurality of interfaces. For the scenario where the MN is a terminal with a single interface, a service flow initiated by the MN may be forwarded to a corresponding MAG, which in turn triggers a PBU flow and generates a unique service flow ID for the service flow to bind the service flow with the address information of the MN, so that the data packets of the MN can be distinguished and controlled based on a service flow. For the scenario where the MN is a terminal with a plurality of interfaces, a service flow initiated via one of the interfaces of the MN may be forwarded to a corresponding MAG, which in turn triggers a PBU flow and generates a unique service flow ID for the service flow to bind the service flow with address information of the interface of the MN, so that data packets via the interfaces of the MN can be distinguished and controlled based on a service flow.

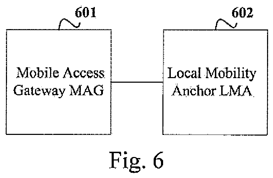

Based upon the same technical concept, an embodiment of the invention provides a PMIPv6-based data transmission system, and since the principle for the system to address the problem is consistent with the PMIPv6-based data transmission method, reference can be made to the implementation of the method for details of an implementation of the system, and a repeated description thereof is omitted here. As illustrated in Fig. 6, the system includes a Mobile Access Gateway (MAG) 601 and a Local Mobility Anchor (LMA) 602.

The MAG 601 and the LMA 602 are configured to establish a bidirectional tunnel based upon binding of a service flow through interaction of messages after an MN initiates the service flow, where a downlink GRE Key and an uplink GRE Key are allocated to the service flow and the LMA 602 is further configured to add a binding relationship between a service flow ID of the service flow and address information of the MN during establishment of the bidirectional tunnel.

The MAG 601 and the LMA 602 are further configured to transmit a data packet of the service flow initiated by the MN over the established bidirectional tunnel according to the service flow ID, the binding relationship and the uplink and downlink GRE Keys.

In a specific implementation, the MAG 601 is further configured to transmit to the LMA 602 a first PBU message instructing to add binding of the service flow upon reception of a first data packet of the service flow initiated by the MN, where the first PBU message includes the service flow ID generated for the service flow and the downlink GRE Key allocated to the service flow; and to receive a first PBA message returned from the LMA 602 in response to the first PBU message, where the first PBA message includes the service flow ID and the uplink GRE Key allocated to the service flow.

The LMA 602 is further configured to add the binding relationship between the service flow ID and the address information of the MN according to the received first PBU message and return the first PBA message to the MAG 601.

In a specific implementation, the MAG 601 is further configured to encapsulate an uplink data packet of the service flow from the MN according to the service flow ID and the uplink GRE Key and forward the encapsulated uplink data packet to the LMA 602 over the bidirectional tunnel, and to de-encapsulate an encapsulated downlink data packet according to the service flow ID and the downlink GRE Key and forward the de-encapsulated downlink data packet to the MN.

The LMA 602 is further configured to encapsulate a downlink data packet of the service flow from a CN according to the service flow ID and the downlink GRE Key and forward the encapsulated downlink data packet to the MAG 601 over the bidirectional tunnel, and to de-encapsulate an encapsulated uplink data packet according to the service flow ID and the uplink GRE Key and forward the de-encapsulated uplink data packet to the CN.

Preferably, the MAG 601 is further configured to transmit to the LMA a second PBU message instructing to delete binding of the service flow upon determining that the MN terminates the service flow, where the second PBU message includes the service flow ID.

The LMA 602 is further configured to delete the locally buffered binding relationship between the service flow ID and the address information of the MN according to the received second PBU message and return to the MAG a second PBA message including the service flow ID.

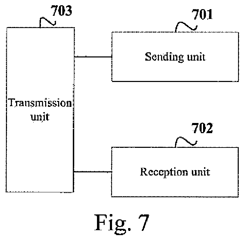

A possible structure of the MAG 601 as illustrated in Fig. 7 includes:
a sending unit 701 configured to transmit to an LMA a first PBU message instructing to add binding of a service flow upon reception of a first data packet of the service flow initiated by an MN, where the first PBU message includes a service flow ID generated for the service flow and a downlink GRE Key allocated to the service flow;
a reception unit 702 configured to receive a first PBA message returned from the LMA in response to the first PBU message, where the first PBA message includes the service flow ID and an uplink GRE Key allocated to the service flow; and
a transmission unit 703 configured to transmit a data packet of the service flow over a bidirectional tunnel established, based upon binding of the service flow, with the LMA, according to the service flow ID and the uplink and downlink GRE Keys.

Preferably, the sending unit 701 is further configured to transmit to the LMA a second PBU message instructing to delete binding of the service flow upon determining that the MN terminates the service flow, where the second PBU message includes the service flow ID.

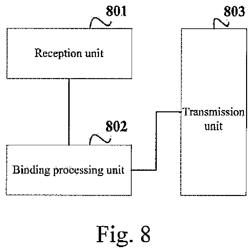

As illustrated in Fig. 8, a possible structure of the LMA 602 includes:
a reception unit 801 configured to receive a first PBU message transmitted from an MAG to instruct to add binding of a service flow, where the first PBU message includes a service flow ID generated for the service flow and a downlink GRE Key allocated to the service flow;
a binding processing unit 802 configured to add a binding relationship between the service flow ID and address information of an MN according to the received first PBU message and return to the MAG a first PBA message including the service flow ID and an uplink GRE Key allocated to the service flow; and
a transmission unit 803 configured to transmit a data packet of the service flow over a bidirectional tunnel established, based upon binding of the service flow, with the MAG, according to the service flow ID, the binding relationship and the uplink and downlink GRE Keys.

Preferably, the binding processing unit 802 is further configured to delete the locally buffered binding relationship between the service flow ID and the address information of the MN according to a received second PBU message and return to the MAG a second PBA message including the service flow ID.

It will be appreciated that one skilled in the art may make various modifications and alterations to the present invention without departing from the scope of the present invention. Accordingly, if these modifications and alterations to the present invention fall within the scope of the claims of the present invention and their equivalents, the present invention intends to include all these modifications and alterations.

## Claims

1. A data transmission method based upon a Proxy Mobile Internet Protocol version 6, PMIPv6, comprising:
establishing, by a Mobile Access Gateway, MAG, and a Local Mobility Anchor, LMA, a bidirectional tunnel based upon binding of a service flow through interaction of messages after a Mobile Node, MN, initiates the service flow, wherein a downlink Generic Routing Encapsulation, GRE, key and an uplink GRE key are allocated to the service flow and the LMA adds a binding relationship between a service flow identifier of the service flow and address information of the MN during establishment of the bidirectional tunnel; and
transmitting, by the MAG and the LMA, a data packet of the service flow initiated by the MN over the bidirectional tunnel according to the service flow identifier, the binding relationship, and the uplink and downlink GRE keys;
wherein, when the MN initiates two or more service flows, each of the service flows has a service flow identifier, and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask.

2. The method of claim 1, wherein establishing by the MAG and the LMA the bidirectional tunnel through interaction of messages after the MN initiates the service flow comprises:
transmitting, by the MAG, to the LMA a first proxy binding update message instructing to add binding of the service flow upon reception of a first data packet of the service flow initiated by the MN, wherein the first proxy binding update message comprises the service flow identifier generated for the service flow and the downlink GRE key allocated to the service flow; and
adding, by the LMA, the binding relationship between the service flow identifier and the address information of the MN according to the received first proxy binding update message and returning to the MAG a first proxy binding ack message comprising the service flow identifier and the uplink GRE key allocated to the service flow.

3. The method of claim 1, wherein transmitting by the MAG and the LMA a data packet of the service flow initiated by the MN over the bidirectional tunnel according to the service flow identifier, the binding relationship, and the uplink and downlink GRE keys comprises:
encapsulating, by the MAG, an uplink data packet of the service flow from the MN according to the service flow identifier and the uplink GRE key and forwarding the encapsulated uplink data packet to the LMA over the bidirectional tunnel, and de-encapsulating, by the LMN, the encapsulated uplink data packet according to the service flow identifier and the uplink GRE key and forwarding the de-encapsulated uplink data packet to a Correspondent Node, CN; and
encapsulating, by the LMA, a downlink data packet of the service flow from the CN according to the service flow identifier and the downlink GRE key and forwarding the encapsulated downlink data packet to the MAG over the bidirectional tunnel, and de-encapsulating, by the MAG, the encapsulated downlink data packet according to the service flow identifier and the downlink GRE key and forwarding the de-encapsulated downlink data packet to the MN.

4. The method of any one of claims 1 to 3, wherein transmitting, by the MAG, to the LMA a second proxy binding update message instructing to delete binding of the service flow upon determining that the MN terminates the service flow, wherein the second proxy binding update message comprises the service flow identifier; and
deleting, by the LMA, the locally buffered binding relationship between the service flow identifier and the address information of the MN according to the received second proxy binding update message and returning to the MAG a second proxy binding ack message comprising the service flow identifier.

5. The method of claim 2, wherein the proxy binding update message further comprises an application level description.

6. The method of claim 2, wherein the proxy binding ack message further comprises an application level description and.

7. The method of claim 5 or 6, wherein the application level description comprises a service identifier and/or an application level protocol in use.

8. A data transmission system based upon a Proxy Mobile Internet Protocol version 6, PMIPv6, comprising a Mobile Access Gateway, MAG, and a Local Mobility Anchor, LMA, wherein:
the MAG and the LMA are configured to establish a bidirectional tunnel based upon binding of a service flow through interaction of messages after a Mobile Node, MN, initiates the service flow, wherein a downlink Generic Routing Encapsulation, GRE, key and an uplink GRE key are allocated to the service flow and the LMA is further configured to add a binding relationship between a service flow identifier of the service flow and address information of the MN during establishment of the bidirectional tunnel; and
the MAG and the LMA are further configured to transmit a data packet of the service flow initiated by the MN over the bidirectional tunnel according to the service flow identifier, the binding relationship and the uplink and downlink GRE keys ; wherein, when the MN initiates two or more service flows, each of the service flows has a service flow identifier, and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask.

9. The system of claim 8, wherein:
the MAG is further configured to transmit to the LMA a first proxy binding update message instructing to add binding of the service flow upon reception of a first data packet of the service flow initiated by the MN, wherein the first proxy binding update message comprises the service flow identifier generated for the service flow and the downlink GRE key allocated to the service flow; and to receive a first proxy binding ack message returned from the LMA in response to the first proxy binding update message, wherein the first proxy binding ack message comprises the service flow identifier and the allocated uplink GRE key; and
the LMA is further configured to add the binding relationship between the service flow identifier and the address information of the MN according to the received first proxy binding update message and return the first proxy binding ack message to the MAG.

10. The system of claim 8, wherein:
the MAG is further configured to encapsulate an uplink data packet of the service flow from the MN according to the service flow identifier and the uplink GRE key and forward the encapsulated uplink data packet to the LMA over the bidirectional tunnel, and to de-encapsulate an encapsulated downlink data packet according to the service flow identifier and the downlink GRE key and forward the de-encapsulated downlink data packet to the MN; and
the LMA is further configured to encapsulate a downlink data packet of the service flow from a Correspondent Node, CN, according to the service flow identifier and the downlink GRE key and forward the encapsulated downlink data packet to the MAG over the bidirectional tunnel, and to de-encapsulate an encapsulated uplink data packet according to the service flow identifier and the uplink GRE key and forward de-encapsulated uplink data packet to the CN.

11. The system of any one of claims 8 to 10, wherein:
the MAG is further configured to transmit to the LMA a second proxy binding update message instructing to delete binding of the service flow upon determining that the MN terminates the service flow, wherein the second proxy binding update message comprises the service flow identifier; and
the LMA is further configured to delete the locally buffered binding relationship between the service flow identifier and the address information of the MN according to the received second proxy binding update message and return to the MAG a second proxy binding ack message comprising the service flow identifier.

12. A Mobile Access Gateway, MAG, comprising:
a sending unit configured to transmit to a Local Mobility Anchor, LMA, a first proxy binding update message instructing to add binding of a service flow upon reception of a first data packet of the service flow initiated by a Mobile Node, MN, wherein the first proxy binding update message comprises a service flow identifier generated for the service flow and a downlink Generic Routing Encapsulation, GRE, key allocated to the service flow; and wherein, when a MN initiates two or more service flows, each of the service flows has a service flow identifier; and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask;
a reception unit configured to receive a first proxy binding ack message returned from the LMA in response to the first proxy binding update message, wherein the first proxy binding ack message comprises the service flow identifier and an uplink GRE key allocated to the service flow; and
a transmission unit configured to transmit a data packet of the service flow over a bidirectional tunnel established, based upon binding of the service flow, with the LMA, according to the service flow identifier and the uplink and downlink GRE keys.

13. The MAG of claim 12, wherein the sending unit is further configured to transmit to the LMA a second proxy binding update message instructing to delete binding of the service flow upon determining that the MN terminates the service flow, wherein the second proxy binding update message comprises the service flow identifier.

14. A Local Mobility Anchor, LMA, comprising:
a reception unit configured to receive a first proxy binding update message transmitted from a Mobile Access Gateway, MAG, to instruct to add binding of a service flow, wherein the first proxy binding update message comprises a service flow identifier generated for the service flow and a downlink Generic Routing Encapsulation, GRE, key allocated to the service flow; and wherein, when a MN initiates two or more service flows, each of the service flows has a service flow identifier; and the service flow identifier comprised in a service flow identification option of the service flow, and the service flow identification option comprises transport level description, the transport level description comprises one or any combination of Destination IP Address, Port Range, Flow Label, Security Parameter Index, Protocol Identifier of the protocol above IP, and Type of Service/Traffic class and Mask;
a binding processing unit configured to add a binding relationship between the service flow identifier and address information of an MN according to the received first proxy binding update message and return to the MAG a first proxy binding ack message comprising the service flow identifier and an uplink GRE key allocated to the service flow; and
a transmission unit configured to transmit a data packet of the service flow over a bidirectional tunnel established, based upon binding of the service flow, with the MAG, according to the service flow identifier, the binding relationship, and the uplink and downlink GRE keys.

15. The LMA of claim 14, wherein the binding processing unit is further configured to delete the locally buffered binding relationship between the service flow identifier and the address information of the MN according to a received second proxy binding update message and return to the MAG a second proxy binding ack message comprising the service flow identifier.

## Patentansprüche

1. Datenübertragungsverfahren auf einer PM-IPV6-Basis, mit den Schritten:
Einrichten, durch ein Mobile Access Gateway, MAG, und einen Local Mobility Anchor, LMA, eines bidirektionalen Tunnels auf der Basis des Verbindens eines Dienstablaufs durch Interaktion von Meldungen, nachdem ein Mobile Node, MN, den Dienstablauf einleitet, wobei ein Downlink-Generic Routing Encapsulation, GRE-Schlüssel und ein Uplink-GRE-Schlüssel dem Dienstablauf zugewiesen werden und der LMA eine Verbindungsbeziehung zwischen einer Dienstablaufkennung des Dienstablaufs und Adressinformationen des MN während der Einrichtung des bidirektionalen Tunnels hinzufügt; und
Übertragen, durch das MAG und den LMA, eines Datenpaketes des durch den MN eingeleiteten Dienstablaufs über den bidirektionalen Tunnel gemäß der Dienstablaufkennung, der Verbindungsbeziehung und den Uplink- und Downlink-GRE-Schlüsseln;
wobei, wenn der MN zwei oder mehr Dienstabläufe einleitet, jeder der Dienstabläufe eine Dienstablauferkennung aufweist, und wobei die Dienstablaufkennung in einer Dienstablauferkennungsmöglichkeit des Dienstablaufs enthalten ist, und die Dienstablauferkennungsmöglichkeit eine Transportebene-Beschreibung aufweist, die Transportebene-Beschreibung eine oder eine Kombination aus Ziel-IP-Adresse, Reichweite, Flow Label, Sicherheitsparameter-Index, Protokollkennung des Protokolls über IP sowie Art der Dienst-/Verkehrsklasse und Maske aufweist.

2. Verfahren nach Anspruch 1, wobei das Einrichten des bidirektionalen Tunnels durch das MAG und den LMA über Interaktion von Meldungen, nachdem der MN den Dienstablauf einleitet, Folgendes aufweist:
Übertragen, durch das MAG, an den LMA einer ersten Proxy-Verbindungsaktualisierungsmeldung, die dazu anweist, das Verbinden des Dienstablaufs bei Empfang eines ersten Datenpaketes des durch den MN eingeleiteten Dienstablaufs hinzuzufügen, wobei die erste Proxy-Verbindungsaktualisierungsmeldung die für den Dienstablauf erzeugte Dienstablaufkennung und den dem Dienstablauf zugewiesenen Downlink-GRE-Schlüssel aufweist; sowie
Hinzufügen, durch den LMA, der Verbindungsbeziehung zwischen der Dienstablaufkennung und der Adressinformation des MN gemäß der empfangenen ersten Proxy-Verbindungsaktualisierungsmeldung, und Rückführen an das MAG einer ersten Proxyverbindungs-ACK-Meldung mit der Dienstablaufkennung und dem dem Dienstablauf zugewiesenen Uplink-GRE-Schlüssel.

3. Verfahren nach Anspruch 1, wobei das Übertragen durch das MAG und den LMA eines Datenpaketes des durch den MN eingeleiteten Dienstablaufs über den bidirektionalen Tunnel gemäß der Dienstablaufkennung, der Verbindungsbeziehung und den Uplink- und Downlink-GRE-Schlüsseln Folgendes aufweist:
Verkapseln, durch das MAG, eines Uplink-Datenpaketes des Dienstablaufs von dem MN gemäß der Dienstablaufkennung und dem Uplink-GRE-Schlüssel und Weiterleiten des verkapselten Uplink-Datenpaketes an den LMA über den bidirektionalen Tunnel, sowie Entkapseln, durch den LMN, des verkapselten Uplink-Datenpaketes gemäß der Dienstablaufkennung und dem Uplink-GRE-Schlüssel und Weiterleiten des entkapselten Uplink-Datenpaketes an einen Correspondent Node, CN; und
Verkapseln, durch den LMA, eines Downlink-Datenpaketes des Dienstablaufs von dem CN gemäß der Dienstablaufkennung und dem Downlink-GRE-Schlüssel und Weiterleiten des verkapselten Downlink-Datenpaketes an das MAG über den bidirektionalen Tunnel, sowie Entkapseln, durch das MAG, des verkapselten Downlink-Datenpaketes gemäß der Dienstablaufkennung und dem Downlink-GRE-Schlüssel und Weiterleiten des entkapselten Downlink-Datenpaketes an den MN.

4. Verfahren nach einem der Ansprüche 1 bis 3, mit dem Übertragen, durch das MAG, an den LMA einer zweiten Proxy-Verbindungsaktualisierungsmeldung, die dazu anweist, die Verbindung des Dienstablaufs zu löschen, wenn bestimmt wird, dass der MN den Dienstablauf beendet, wobei die zweite Proxy-Verbindungsaktualisierungsmeldung die Dienstablaufkennung aufweist; und
dem Löschen, durch den LMA, der lokal gepufferten Verbindungsbeziehung zwischen der Dienstablaufkennung und der Adressinformation des MN gemäß der empfangenen zweiten Proxy-Verbindungsaktualisierungsmeldung und dem Zurückführen zu dem MAG einer zweiten Proxyverbindungs-ACK-Meldung, die die Dienstablaufkennung aufweist.

5. Verfahren nach Anspruch 2, wobei die Proxy-Verbindungsaktualisierungsmeldung ferner eine Anwendungsebene-Beschreibung aufweist.

6. Verfahren nach Anspruch 2, wobei die Proxyverbindungs-ACK-Meldung ferner eine Anwendungsebene-Beschreibung aufweist.

7. Verfahren nach Anspruch 5 oder 6, wobei die Anwendungsebene-Beschreibung eine Dienstkennung und/oder ein Anwendungsebene-Protokoll im Einsatz aufweist.

8. Datenübertragungssystem auf einer PM-IPV6-Basis, mit einem Mobile Access Gateway, MAG, und einem Local Mobility Anchor, LMA, wobei:
das MAG und der LMA dazu konfiguriert sind, einen bidirektionalen Tunnel auf der Basis des Verbindens eines Dienstablaufes über Interaktion von Meldungen einzurichten, nachdem ein Mobile Node, MN, den Dienstablauf einleitet, wobei ein Downlink-GRE-Schlüssel und ein Uplink-GRE-Schlüssel dem Dienstablauf zugewiesen werden und der LMA ferner dazu konfiguriert ist, eine Verbindungsbeziehung zwischen einer Dienstablaufkennung des Dienstablaufs und Adressinformation des MN während der Einrichtung des bidirektionalen Tunnels hinzuzufügen; und
das MAG und der LMA ferner dazu konfiguriert sind, ein Datenpaket des durch den MN eingeleiteten Dienstablaufs über den bidirektionalen Tunnel gemäß der Dienstablaufkennung, der Verbindungsbeziehung und den Uplink- und Downlink-GRE-Schlüsseln zu übertragen; wobei, wenn der MN zwei oder mehr Dienstabläufe einleitet, jeder der Dienstabläufe eine Dienstablaufkennung aufweist, und wobei die Dienstablaufkennung in einer Dienstablauferkennungsmöglichkeit des Dienstablaufs enthalten ist, und die Dienstablauferkennungsmöglichkeit eine Transportebene-Beschreibung aufweist, die Transportebene-Beschreibung eine oder eine beliebige Kombination aus Ziel-IP-Adresse, Reichweite, Flow Label, Sicherheitsparameterindex, Protokollkennung des Protokolls über IP und Art der Dienst-/Verkehrsklasse und Maske aufweist.

9. System nach Anspruch 8, wobei:
das MAG ferner dazu konfiguriert ist, an den LMA eine erste Proxy-Verbindungsaktualisierungsmeldung zu übertragen, die dazu anweist, eine Verbindung des Dienstablaufs bei Empfang eines ersten Datenpaketes des durch den MN eingeleiteten Dienstablaufs hinzuzufügen, wobei die erste Proxy-Verbindungsaktualisierungsmeldung die für den Dienstablauf erzeugte Dienstablaufkennung und den dem Dienstablauf zugewiesenen Downlink-GRE-Schlüssel aufweist; und eine erste Proxyverbindungs-ACK-Meldung zu empfangen, die von dem LMA in Abhängigkeit der ersten Proxy-Verbindungsaktualisierungsmeldung zurückgeführt wird, wobei die erste Proxyverbindungs-ACK-Meldung die Dienstablaufkennung und den zugewiesenen Uplink-GRE-Schlüssel aufweist; und
der LMA ferner dazu konfiguriert ist, die Verbindungsbeziehung zwischen der Dienstablaufkennung und der Adressinformation des MN gemäß der empfangenen ersten Proxy-Verbindungsaktualisierungsmeldung hinzuzufügen und die erste Proxyverbindungs-ACK-Meldung an das MAG zurückzuführen.

10. System nach Anspruch 8, wobei:
das MAG ferner dazu konfiguriert ist, ein Uplink-Datenpaket des Dienstablaufs von dem MN gemäß der Dienstablaufkennung und dem Uplink-GRE-Schlüssel zu verkapseln und das verkapselte Uplink-Datenpaket über den bidirektionalen Tunnel an den LMA weiterzuleiten, sowie ein verkapseltes Downlink-Datenpaket gemäß der Dienstablaufkennung und dem Downlink-GRE-Schlüssel zu entkapseln und das entkapselte Downlink-Datenpaket an den MN weiterzuleiten; und
der LMA ferner dazu konfiguriert ist, ein Downlink-Datenpaket des Dienstablaufs von einem Correspondent Node, CN, gemäß der Dienstablaufkennung und dem Downlink-GRE-Schlüssel zu verkapseln und das verkapselte Downlink-Datenpaket über den bidirektionalen Tunnel an das MAG weiterzuleiten, sowie ein verkapseltes Uplink-Datenpaket gemäß der Dienstablaufkennung und dem Uplink-GRE-Schlüssel zu entkapseln und das entkapselte Uplink-Datenpaket an den CN weiterzuleiten.

11. System nach einem der Ansprüche 8 bis 10, wobei:
das MAG ferner dazu konfiguriert ist, an den LMA eine zweite Proxy-Verbindungsaktualisierungsmeldung zu übertragen, die dazu anweist, die Verbindung des Dienstablaufs zu löschen, wenn bestimmt wird, dass der MN den Dienstablauf beendet, wobei die zweite Proxy-Verbindungsaktualisierungsmeldung die Dienstabiaufkennung aufweist; und
der LMA ferner dazu konfiguriert ist, die lokal gepufferte Verbindungsbeziehung zwischen der Dienstablaufkennung und der Adressinformation des MN gemäß der empfangenen zweiten Proxy-Verbindungsaktualisierungsmeldung zu löschen und eine zweite Proxyverbindungs-ACK-Meldung mit der Dienstablaufkennung an das MAG zurückzuführen.

12. Mobile Access Gateway, MAG, mit:
einer Sendeeinheit, die dazu konfiguriert ist, an einen Local Mobility Anchor, LMA, eine erste Proxy-Verbindungsaktualisierungsmeldung zu übertragen, die dazu anweist, die Verbindung eines Dienstablaufs bei Empfang eines ersten Datenpaketes des durch einen Mobile Node, MN, eingeleiteten Dienstablaufs hinzuzufügen, wobei die erste Proxy-Verbindungsaktualisierungsmeldung eine für den Dienstablauf erzeugte Dienstablaufkennung und einen dem Dienstablauf zugewiesenen Downlink Generic Routing Encapsulation, GRE, Schlüssel aufweist; und wobei, wenn ein MN zwei oder mehr Dienstabläufe einleitet, jeder der Dienstabläufe eine Dienstabiaufkennung aufweist; und wobei die Dienstabiaufkennung in einer Dienstablauferkennungsmöglichkeit des Dienstablaufs enthalten ist, und die Dienstablauferkennungsmöglichkeit eine Transportebene-Beschreibung aufweist, die Transportebene-Beschreibung eine oder eine beliebige Kombination aus Ziel-IP-Adresse, Reichweite, Flow Label, Sicherheitsparameter-Index, Protokollkennung des Protokolls über IP sowie Art der Dienst-/Verkehrsklasse und Maske aufweist;
einer Empfangseinheit, die dazu konfiguriert ist, eine erste Proxyverbindungs-ACK-Meldung zu empfangen, die von dem LMA in Abhängigkeit der ersten Proxy-Verbindungsaktualisierungsmeldung zurückgeführt wird, wobei die erste Proxyverbindungs-ACK-Meldung die Dienstablaufkennung und einen dem Dienstablauf zugewiesenen Uplink-GRE-Schlüssel aufweist; und
einer Übertragungseinheit, die dazu konfiguriert ist, ein Datenpaket des Dienstablaufs über einen bidirektionalen Tunnel, der auf der Basis der Verbindung des Dienstablaufs mit dem LMA eingerichtet ist, gemäß der Dienstablaufkennung und den Uplink- und Downlink-GRE-Schlüsseln zu übertragen.

13. MAG nach Anspruch 12, wobei die Sendeeinheit ferner dazu konfiguriert ist, an den LMA eine zweite Proxy-Verbindungsaktualisierungsmeldung zu übertragen, die dazu anweist, die Verbindung des Dienstablaufs zu löschen, wenn bestimmt wird, dass der MN den Dienstablauf beendet, wobei die zweite Proxy-Verbindungsaktualisierungsmeldung die Dienstablaufkennung aufweist.

14. Local Mobility Anchor, LMA, mit:
einer Empfangseinheit, die dazu konfiguriert ist, eine erste Proxy-Verbindungsaktualisierungsmeldung zu empfangen, die von einem Mobile Access Gateway, MAG, übertragen wird, um dazu anzuweisen, die Verbindung eines Dienstablaufs hinzuzufügen, wobei die erste Proxy-Verbindungsaktualisierungsmeldung eine für den Dienstablauf erzeugte Dienstablaufkennung und einen dem Dienstablauf zugewiesenen Downlink-GRE-Schlüssel aufweist; und wobei, wenn ein MN zwei oder mehr Dienstabläufe einleitet, jeder der Dienstabläufe eine Dienstablaufkennung aufweist; und wobei die Dienstablaufkennung in einer Dienstablauferkennungsmöglichkeit des Dienstablaufs enthalten ist, und die Dienstablauferkennungsmöglichkeit eine Transportebene-Beschreibung aufweist, die Transportebene-Beschreibung eine oder eine beliebige Kombination aus Ziel-IP-Adresse, Reichweite, Flow Label, Sicherheitsparameter-Index, Protokollkennung des Protokolls über IP und Art der Dienst-/Verkehrsklasse und Maske aufweist;
einer Verbindungsverarbeitungseinheit, die dazu konfiguriert ist, eine Verbindungsbeziehung zwischen der Dienstablaufkennung und Adressinformation eines MN gemäß der empfangenen ersten Proxy-Verbindungsaktualisierungsmeldung hinzuzufügen und eine erste Proxyverbindungs-ACK-Meldung mit der Dienstablaufkennung und einem dem Dienstablauf zugewiesenen Uplink-GRE-Schlüssel an das MAG zurückzuführen; sowie
einer Übertragungseinheit, die dazu konfiguriert ist, ein Datenpaket des Dienstablaufs über einen auf der Basis der Verbindung des Dienstablaufes mit dem MAG eingerichteten bidirektionalen Tunnel gemäß der Dienstablaufkennung, der Verbindungsbeziehung und den Uplink- und Downlink-GRE-Schlüsseln zu übertragen.

15. LMA nach Anspruch 14, wobei die Verbindungsverarbeitungseinheit ferner dazu konfiguriert ist, die lokal gepufferte Verbindungsbeziehung zwischen der Dienstablaufkennung und der Adressinformation des MN gemäß einer empfangenen zweiten Proxy-Verbindungsaktualisierungsmeldung zu löschen und eine zweite Proxyverbindungs-ACK-Meldung mit der Dienstablaufkennung an das MAG zurückzuführen.

## Revendications

1. Procédé de transmission de données basé sur un protocole PMIPv6 (Proxy Mobile Internet Protocol version 6), comportant les étapes consistant à :
établir, par une passerelle d'accès mobile, MAG, et une ancre de mobilité locale, LMA, un tunnel bidirectionnel basé sur le rattachement d'un flux de service par l'interaction de messages après qu'un nœud mobile, MN, initie le flux de service, dans lequel une clé d'encapsulation de routage générique, GRE, de liaison descendante et une clé GRE de liaison montante sont allouées au flux de service et le LMA ajoute une relation de rattachement entre un identifiant de flux de service du flux de service et des informations d'adresse du MN pendant l'établissement du tunnel bidirectionnel ; et
transmettre, par le MAG et le LMA, un paquet de données du flux de service initié par le MN via le tunnel bidirectionnel en fonction de l'identifiant de flux de service, de la relation de rattachement et des clés GRE de liaisons montante et descendante ;
dans lequel, lorsque le MN initie deux flux de service ou plus, chacun des flux de service a un identifiant de flux de service, et l'identifiant de flux de service est compris dans une option d'identification de flux de service du flux de service, et l'option d'identification de flux de service comporte une description de niveau de transport, la description de niveau de transport comportant une ou toute combinaison d'une adresse IP de destination, d'une plage de ports, d'une étiquette de flux, d'un indice de paramètre de sécurité, d'un identifiant de protocole du protocole au-dessus d'IP, et d'un type de classe de service/trafic et d'un masque.

2. Procédé selon la revendication 1, dans lequel l'établissement par le MAG et le LMA du tunnel bidirectionnel par l'interaction de messages après que le MN initie le flux de service comporte les étapes consistant à :
transmettre, par le MAG, au LMA un premier message de mise à jour de rattachement de serveur mandataire ordonnant d'ajouter un rattachement du flux de service à réception d'un premier paquet de données du flux de service initié par le MN, dans lequel le premier message de mise à jour de rattachement de serveur mandataire comporte l'identifiant de flux de service généré pour le flux de service et la clé GRE de liaison descendante allouée au flux de service ; et
ajouter, par le LMA, la relation de rattachement entre l'identifiant de flux de service et les informations d'adresse du MN en fonction du premier message de mise à jour de rattachement de serveur mandataire reçu et renvoyer au MAG un premier message d'acquittement de rattachement de serveur mandataire comportant l'identifiant de flux de service et la clé GRE de liaison montante allouée au flux de service.

3. Procédé selon la revendication 1, dans lequel la transmission par le MAG et le LMA d'un paquet de données du flux de service initié par le MN via le tunnel bidirectionnel en fonction de l'identifiant de flux de service, de la relation de rattachement et des clés GRE de liaisons montante et descendante comporte les étapes consistant à :
encapsuler, par le MAG, un paquet de données de liaison montante du flux de service provenant du MN en fonction de l'identifiant de flux de service et de la clé GRE de liaison montante et transférer le paquet de données de liaison montante encapsulé au LMA via le tunnel bidirectionnel, et désencapsuler, par le LMN, le paquet de données de liaison montante encapsulé en fonction de l'identifiant de flux de service et de la clé GRE de liaison montante et transférer le paquet de données de liaison montante désencapsulé vers un nœud de correspondant, CN ; et
encapsuler, par le LMA, un paquet de données de liaison descendante du flux de service provenant du CN en fonction de l'identifiant de flux de service et de la clé GRE de liaison descendante et transférer au MAG le paquet de données de liaison descendante encapsulé via le tunnel bidirectionnel, et désencapsuler, par le MAG, le paquet de données de liaison descendante encapsulé en fonction de l'identifiant de flux de service et de la clé GRE de liaison descendante et transférer au MN le paquet de données de liaison descendante désencapsulé.

4. Procédé selon l'une quelconque des revendications 1 à 3, incluant de transmettre, par le MAG, au LMA un second message de mise à jour de rattachement de serveur mandataire ordonnant de supprimer un rattachement du flux de service lorsqu'il est déterminé que le MN met fin au flux de service, dans lequel le second message de mise à jour de rattachement de serveur mandataire comporte l'identifiant de flux de service ; et
supprimer, par le LMA, la relation de rattachement localement mise en tampon entre l'identifiant de flux de service et les informations d'adresse du MN en fonction du second message de mise à jour de rattachement de serveur mandataire reçu et renvoyer au MAG un second message d'acquittement de rattachement de serveur mandataire comportant l'identifiant de flux de service.

5. Procédé selon la revendication 2, dans lequel le message de mise à jour de rattachement de serveur mandataire comporte en outre une description de niveau d'application.

6. Procédé selon la revendication 2, dans lequel le message d'acquittement de rattachement de serveur mandataire comporte en outre une description de niveau d'application.

7. Procédé selon la revendication 5 ou 6, dans lequel la description de niveau d'application comporte un identifiant de services et/ou un protocole de niveau d'application en utilisation.

8. Système de transmission de données basé sur un protocole PMPIv6 (Proxy Mobile Internet Protocol version 6), comportant une passerelle d'accès mobile, MAG, et une ancre de mobilité locale, LMA, dans lequel :
le MAG et le LMA sont configurés pour établir un tunnel bidirectionnel basé sur le rattachement d'un flux de service par l'interaction de messages après qu'un nœud mobile, MN, initie le flux de service, dans lequel une clé d'encapsulation de routage générique, GRE, de liaison descendante et une clé GRE de liaison montante sont allouées au flux de service et le LMA est en outre configuré pour ajouter une relation de rattachement entre un identifiant de flux de service du flux de service et des informations d'adresse du MN pendant l'établissement du tunnel bidirectionnel ; et
le MAG et le LMA sont en outre configurés pour transmettre un paquet de données du flux de service initié par le MN via le tunnel bidirectionnel en fonction de l'identifiant de flux de service, de la relation de rattachement et des clés GRE de liaisons montante et descendante ; dans lequel, lorsque le MN initie deux flux de service ou plus, chacun des flux de service a un identifiant de flux de service, et l'identifiant de flux de service est compris dans une option d'identification de flux de service du flux de service, et l'option d'identification de flux de service comporte une description de niveau de transport, la description de niveau de transport comportant une ou toute combinaison d'une adresse IP de destination, d'une plage de ports, d'une étiquette de flux, d'un indice de paramètre de sécurité, d'un identifiant de protocole du protocole au-dessus d'IP, et d'un type de classe de service/trafic et d'un masque.

9. Système selon la revendication 8, dans lequel :
le MAG est en outre configuré pour transmettre au LMA un premier message de mise à jour de rattachement de serveur mandataire ordonnant d'ajouter un rattachement du flux de service à réception d'un premier paquet de données du flux de service initié par le MN, dans lequel le premier message de mise à jour de rattachement de serveur mandataire comporte l'identifiant de flux de service généré pour le flux de service et la clé GRE de liaison descendante allouée au flux de service ; et pour recevoir un premier message d'acquittement de rattachement de serveur mandataire renvoyé à partir du LMA en réponse au premier message de mise à jour de rattachement de serveur mandataire, dans lequel le premier message d'acquittement de rattachement de serveur mandataire comporte l'identifiant de flux de service et la clé GRE de liaison montante allouée ; et
le LMA est en outre configuré pour ajouter la relation de rattachement entre l'identifiant de flux de service et les informations d'adresse du MN en fonction du premier message de mise à jour de rattachement de serveur mandataire reçu et renvoyer au MAG le premier message d'acquittement de rattachement de serveur mandataire.

10. Système selon la revendication 8, dans lequel :
le MAG est en outre configuré pour encapsuler un paquet de données de liaison montante du flux de service provenant du MN en fonction de l'identifiant de flux de service et de la clé GRE de liaison montante et transférer au LMA le paquet de données de liaison montante encapsulé via le tunnel bidirectionnel, et désencapsuler un paquet de données de liaison montante encapsulé en fonction de l'identifiant de flux de service et de la clé GRE de liaison descendante et transférer au MN le paquet de données de liaison descendante désencapsulé ;
le LMA est en outre configuré pour encapsuler un paquet de données de liaison descendante du flux de service provenant d'un nœud de correspondant, CN, en fonction de l'identifiant de flux de service et de la clé GRE de liaison descendante et transférer au MAG le paquet de données de liaison descendante encapsulé via le tunnel bidirectionnel, et pour désencapsuler un paquet de données de liaison montante encapsulé en fonction de l'identifiant de flux de service et de la clé GRE de liaison montante et transférer au CN le paquet de données de liaison montante désencapsulé.

11. Système selon l'une quelconque des revendications 8 à 10, dans lequel :
le MAG est en outre configuré pour transmettre au LMA un second message de mise à jour de rattachement de serveur mandataire ordonnant de supprimer un rattachement du flux de service lorsqu'il est déterminé que le MN met fin au flux de service, dans lequel le second message de mise à jour de rattachement de serveur mandataire comporte l'identifiant de flux de service ; et
le LMA est en outre configuré pour supprimer la relation de rattachement localement mise en tampon entre l'identifiant de flux de service et les informations d'adresse du MN en fonction du second message de mise à jour de rattachement de serveur mandataire et renvoyer au MAG un second message d'acquittement de rattachement de serveur mandataire comportant l'identifiant de flux de service.

12. Passerelle d'accès mobile, MAG, comportant :
une unité d'émission configurée pour transmettre à une ancre de mobilité locale, LMA, un premier message de mise à jour de rattachement de serveur mandataire ordonnant d'ajouter un rattachement d'un flux de service à réception d'un premier paquet de données du flux de service initié par un nœud mobile, MN, dans lequel le premier message de mise à jour de rattachement de serveur mandataire comporte un identifiant de flux de service généré pour le flux de service et une clé d'encapsulation de routage générique, GRE, de liaison descendante allouée au flux de service ; et dans lequel, lorsqu'un MN initie deux flux de service ou plus, chacun des flux de service a un identifiant de flux de service ; et l'identifiant de flux de service est compris dans une option d'identification de flux de service du flux de service, et l'option d'identification de flux de service comportant une description de niveau de transport, la description de niveau de transport comporte une ou toute combinaison d'une adresse IP de destination, d'une plage de ports, d'une étiquette de flux, d'un indice de paramètre de sécurité, d'un identifiant de protocole du protocole au-dessus d'IP, et d'un type de classe de service/trafic et d'un masque ;
une unité de réception configurée pour recevoir un premier message d'acquittement de rattachement de serveur mandataire renvoyé à partir du LMA en réponse au premier message de mise à jour de rattachement de serveur mandataire, dans lequel le premier message d'acquittement de rattachement de serveur mandataire comporte l'identifiant de flux de service et une clé GRE de liaison montante allouée au flux de service ; et
une unité de transmission configurée pour transmettre un paquet de données du flux de service via un tunnel bidirectionnel établi, sur la base d'un rattachement du flux de service, avec le LMA, en fonction de l'identifiant de flux de service et des clés GRE de liaisons montante et descendante.

13. MAG selon la revendication 12, dans lequel l'unité d'émission est en outre configurée pour transmettre au LMA un second message de mise à jour de rattachement de serveur mandataire ordonnant de supprimer un rattachement du flux de service lorsqu'il est déterminé que le MN met fin au flux de service, dans lequel le second message de mise à jour de rattachement de serveur mandataire comporte l'identifiant de flux de service.

14. Ancre de motilité locale, LMA, comportant :
une unité de réception configurée pour recevoir un premier message de mise à jour de rattachement de serveur mandataire transmis à partir d'une passerelle d'accès mobile, MAG, pour ordonner d'ajouter un rattachement d'un flux de service, dans lequel le premier message de mise à jour de rattachement de serveur mandataire comporte un identifiant de flux de service généré pour le flux de service et une clé d'encapsulation de routage générique, GRE, de liaison descendante allouée au flux de service ; et dans lequel, lorsqu'un MN initie deux flux de service ou plus, chacun des flux de service a un identifiant de flux de service ; et l'identifiant de flux de service est compris dans une option d'identification de flux de service du flux de service, et l'option d'identification de flux de service comportant une description de niveau de transport, la description de niveau de transport comporte une ou toute combinaison d'une adresse de destination, d'une plage de ports, d'une étiquette de flux, d'un indice de paramètre de sécurité, d'un identifiant de protocole du protocole au-dessus d'IP, et d'un type de classe de service/trafic et d'un masque ;
une unité de traitement de rattachement configurée pour ajouter une relation de rattachement entre l'identifiant de flux de service et des informations d'adresse d'un MN en fonction du premier message de mise à jour de rattachement de serveur mandataire reçu et renvoyer au MAG un premier message d'acquittement de rattachement de serveur mandataire comportant l'identifiant de flux de service et la clé GRE de liaison montante allouée au flux de service ; et
une unité de transmission configurée pour transmettre un paquet de données du flux de service via un tunnel bidirectionnel établi, sur la base d'un rattachement du flux de service, avec le MAG, en fonction de l'identifiant de flux de service, de la relation de rattachement et des clés GRE de liaisons montante et descendante.

15. LMA selon la revendication 14, dans lequel l'unité de traitement de rattachement est en outre configurée pour supprimer la relation de liaison localement mise en tampon entre l'identifiant de flux de services et les informations d'adresse du MN en fonction d'un second message de mise à jour de rattachement de serveur mandataire reçu et renvoyer au MAG un second message d'acquittement de rattachement de serveur mandataire comportant l'identifiant de flux de services.
